# DEMANDE DE BREVET EUROPEEN

(11) **EP 0 781 952 A1**
(43) Date de publication de la demande: **02.07.1997**
(21) Numéro de dépôt: 96120348.6
(22) Date de dépôt: 18.12.1996
(51) Int. Cl.: F16L 37/56, F16L 21/08, F16L 37/12

(54) **Dispositif pour le raccordement coaxial de tubulures**

(30) Priorité: 26.12.1995 FR 9515494
(71) Demandeur: VALEO CLIMATISATION, 78321 La Verrière (FR)
(72) Inventeur: Breton, Michel, 78120 Rambouillet (FR)
(74) Mandataire: Gamonal, Didier

(57) **Abrégé**

Une pièce moulée unique (20) présentant des encoches (21, 23, 24) chevauche des paires de tubulures (1/4, 2/5, 3/6) de façon à maintenir celles-ci emboîtées avec compression d'un joint torique d'étanchéité. Cette pièce est elle-même maintenue en place par accrochage sur les tubulures, qui sont enveloppées dans leur ensemble sur plus d'un demi-tour par les encoches, sa mise en place s'effectuant avec déformation élastique.

## Description

L'invention concerne un dispositif pour le raccordement coaxial bout à bout d'au moins une paire de tubulures dans un circuit de fluide, par emboîtement d'une région d'extrémité d'une première tubulure de la paire dans une région d'extrémité de la seconde tubulure, ce dispositif comprenant un épaulement intérieur et un épaulement extérieur prévus dans la région d'extrémité de la seconde tubulure, tournés respectivement vers son extrémité de raccordement et à l'opposé de celle-ci, une collerette radialement extérieure prévue dans la région d'extrémité de la première tubulure, propre à venir axialement en regard dudit épaulement intérieur, et un organe de verrouillage prenant appui sur l'épaulement extérieur et sur la collerette pour serrer axialement de façon étanche au fluide un joint annulaire d'étanchéité entre l'épaulement intérieur et la collerette.

Un tel dispositif est utilisé notamment pour établir un circuit de fluide caloporteur dans un véhicule automobile, et plus particulièrement pour raccorder des tubulures d'entrée et/ou de sortie d'un échangeur de chaleur, dans lequel le fluide doit échanger de la chaleur avec un autre milieu, et des conduites amenant le fluide dans et/ou hors de cet échangeur de chaleur.

Le but de l'invention est de réaliser le raccordement par des moyens très simples, ne demandant qu'un temps de main d'oeuvre très court sur une chaîne de montage.

L'invention vise notamment un dispositif du genre défini en introduction, et prévoit que l'organe de verrouillage comprend une pièce monobloc présentant deux faces d'appui tournées axialement l'une vers l'autre pour coopérer avec l'épaulement extérieur et avec la collerette respectivement, ces deux faces d'appui étant disposées au voisinage d'une encoche qui traverse axialement la pièce monobloc et dans laquelle les tubulures peuvent être au moins partiellement insérées par un mouvement radial de ladite pièce par rapport à la paire ou à l'ensemble des paires de tubulures, des portions de bord concaves, se faisant face mutuellement, de l'encoche ou de deux encoches associées à des paires de tubulures différentes enveloppant étroitement les tubulures correspondantes, de telle sorte que ledit mouvement s'accompagne d'un écartement desdites portions par déformation élastique de ladite pièce qui se referme ensuite sur les tubulures.

Pour le raccordement d'au moins deux paires de tubulures, l'invention prévoit un dispositif présentant au moins deux encoches dont chacune possède un bord concave propre à envelopper étroitement les tubulures correspondantes sur environ la moitié de leur circonférence, lesdits bords ayant leurs concavités tournées sensiblement vers un même point.

Des caractéristiques optionnelles de l'invention, complémentaires ou alternatives, sont énoncées ci-après :
- La face d'appui associée à la collerette se raccorde par un dièdre saillant à une face tournée radialement vers l'intérieur, venant en appui sur la première tubulure au-delà de la collerette par rapport à l'extrémité de la tubulure et contribuant à définir le bord de l'encoche.
- La face d'appui associée à l'épaulement extérieur se raccorde par un dièdre saillant à une face tournée radialement vers l'intérieur, venant en appui sur la seconde tubulure au-delà de cet épaulement, et/ou par un dièdre rentrant à une face tournée radialement vers l'intérieur, venant en appui sur la seconde tubulure en-deçà de cet épaulement, par rapport à l'extrémité de celle-ci, et contribuant à définir le bord de l'encoche.

Les caractéristiques et avantages de l'invention seront exposés plus en détail dans la description ci-après, en se référant aux dessins annexés, sur lesquels:
- la figure 1 est une vue de face d'un organe de verrouillage d'un dispositif selon l'invention pour le raccordement de trois paires de tubulures;
- la figure 2 est une vue d'arrière de l'organe de verrouillage;
- la figure 3 est une vue selon la flèche F3 de la figure 1;
- la figure 4 est une vue en perspective montrant l'organe de verrouillage monté sur les trois paires de tubulures;
- la figure 5 est une vue partielle en coupe selon la ligne V-V de la figure 1, montrant l'organe de verrouillage et une paire de tubulures; et
- la figure 6 est une vue analogue à la figure 5, montrant l'organe de verrouillage non monté.

Le dispositif illustré est destiné à raccorder des tubulures appartenant à une boîte à fluide, non représentée dans son ensemble, d'un radiateur de chauffage de l'habitacle d'un véhicule automobile à des tubulures reliant cette boîte à fluide aux autres composants du circuit de fluide caloporteur. Dans l'exemple particulier, deux régions distinctes du radiateur servent à chauffer indépendamment les moitiés gauche et droite de l'habitacle, et trois tubulures 1, 2, 3 sont prévues sur la boîte à fluide, dont une pour la circulation du fluide dans un sens (entrée ou sortie du radiateur) et les deux autres pour la circulation dans le sens opposé, ces deux dernières tubulures desservant respectivement les deux parties du radiateur. Les tubulures 1, 2 et 3 se raccordent respectivement à des tubulures 4, 5 et 6. Cependant, l'invention est applicable à un nombre quelconque de paire(s) de tubulures.

De façon connue, comme représenté à la figure 5 pour la tubulure 6, une région d'extrémité de chacune des tubulures mâles 4 à 6 s'emboîte dans une région d'extrémité de la tubulure femelle correspondante 1 à 3, ces deux régions d'extrémités étant de révolution autour d'un même axe 7. La tubulure mâle 6 présente, à une certaine distance de son extrémité de raccordement 8, une collerette radialement extérieure 9 formée par un bourrelet de sa paroi. Au voisinage de l'extrémité 8, la tubulure femelle 3 entoure la tubulure mâle avec un faible jeu, puis s'écarte de celle-ci, au voisinage de la collerette, par un épaulement 10 se raccordant à une région cylindrique élargie 11 dont le diamètre intérieur est inférieur au diamètre extérieur de la collerette. Au voisinage immédiat de son extrémité libre 12, la tubulure 3 présente un chanfrein tronconique 13 qui élargit son diamètre intérieur au-delà du diamètre extérieur de la collerette et par lequel elle peut s'appuyer axialement sur cette dernière en comprimant un joint torique d'étanchéité 14 logé entre la collerette 9 et l'épaulement 10. A partir de son extrémité 12, la surface extérieure de la tubulure femelle 3 présente une région cylindrique 15 qui se raccorde par un épaulement radial 16 à une région cylindrique 17 de plus petit rayon, s'étendant axialement jusqu'au-delà de l'extrémité 8 de la tubulure mâle 6. Les épaulements 10 et 16 sont tournés à l'opposé l'un de l'autre.

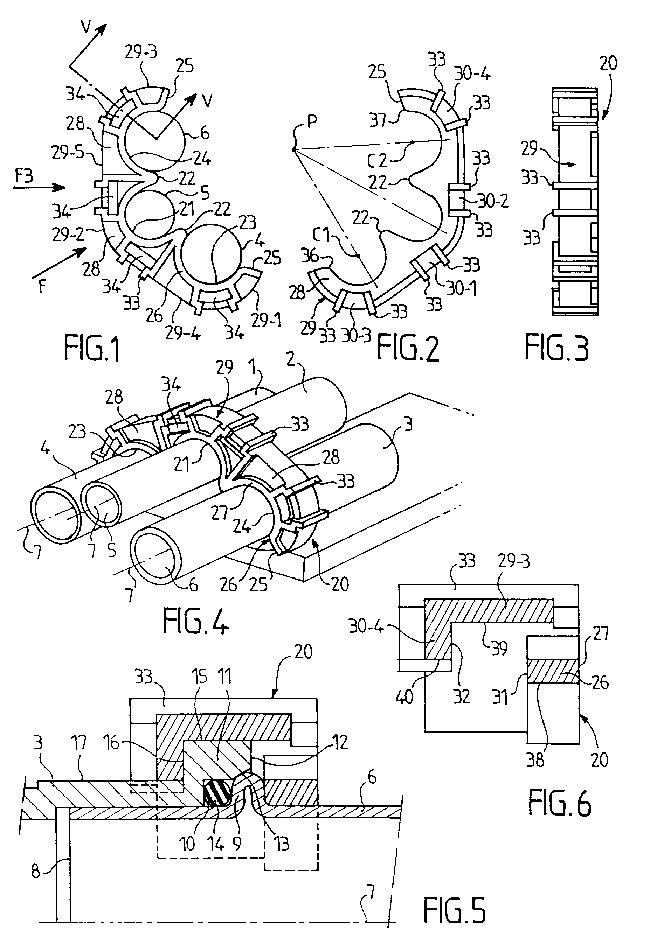

Selon l'invention, les trois paires de tubulures sont maintenues emboîtées dans la position relative décrite et représentée par un organe de verrouillage constitué par une pièce unique moulée en matière plastique 20. L'ensemble formé par les trois paires de tubulures et la pièce 20 est symétrique par rapport à un plan passant par l'axe 7 de la paire 2, 5, les axes 7 de la paire 1, 4 et de la paire 3, 6 étant disposés dans les deux faces respectivement d'un dièdre obtus ayant pour arête l'axe de la paire 2, 5 et ces trois axes étant parallèles. La pièce 20 présente, en vue axiale comme représenté aux figures 1 et 2, la forme générale d'une barrette coudée en son milieu selon un angle obtus correspondant à l'angle du dièdre formé par les axes des paires de tubulures, trois encoches étant ménagées dans la barrette, du côté intérieur de l'angle obtus, pour recevoir les paires de tubulures. Le bord du profil de la pièce 20 tourné vers l'intérieur de l'angle obtus, comme vu sur les figures 1 et 2, comprend une région médiane concave 21 en forme de U, définissant l'encoche de réception de la paire de conduites 2, 5, le fond du U étant constitué par un demi-cercle d'un rayon approprié pour venir entourer étroitement la tubulure mâle 5 au voisinage de la face arrière de la collerette 9. La région en U 21 se raccorde, par l'intermédiaire d'arrondis convexes 22, à deux régions latérales concaves 23 et 24 sensiblement semi-circulaires, dont le rayon correspond de la même façon à celui des tubulures mâles 4 et 6. Les régions semi-circulaires 23 et 24 se raccordent à leur tour à des régions terminales 25 disposées sensiblement radialement par rapport à celles-ci. Le bord intérieur décrit ci-dessus est marqué par un cordon de matière 26 s'étendant sur toute sa longueur. Ce cordon présente, en section par un plan orthogonal au bord, comme on le voit sur les figures 5 et 6, un profil sensiblement rectangulaire dont les grands côtés sont orientés parallèlement aux axes 7. Légèrement en retrait par rapport au côté 27 de ce profil tourné axialement vers les tubulures mâles, la pièce 20 présente un voile plan 28 qui s'étend radialement à partir du cordon vers l'extérieur de l'angle obtus de la pièce et se raccorde à une paroi cylindrique 29 composée de trois régions en arc de cercle 29-1, 29-2 et 29-3 centrées respectivement sur les axes 7 des encoches 23, 21 et 24, et de deux régions planes 29-4 et 29-5 raccordant tangentiellement les précédentes, les régions 29-1 et 29-3 s'étendant jusqu'aux extrémités du bord intérieur délimité par le cordon 26. La paroi 29 se raccorde à son tour, sur son bord tourné axialement vers les tubulures femelles, à quatre éléments de paroi radiaux espacés les uns des autres dans la direction longitudinale de la pièce 20, à savoir deux éléments médians 30-1 et 30-2 proches de l'encoche 21 et deux éléments 30-3 et 30-4 proches des encoches 23 et 24 respectivement. Les éléments de paroi 30-1 à 30-4 s'étendent jusqu'à des distances par rapport aux axes 7 correspondant au rayon des régions 17 des tubulures femelles correspondantes de façon à venir en appui sur ces dernières. Par ailleurs, la distance axiale entre le côté 31 du profil du cordon 26 tourné axialement vers l'intérieur de la pièce et la face 32 des éléments de paroi 30-1 à 30-4 tournés axialement vers l'intérieur est égale à la distance entre l'épaulement 16 des tubulures femelles et la face arrière de la collerette 9 des tubulures mâles dans leur position rapprochée, de sorte que cette position est maintenue par la pièce 20 lorsque celle-ci est mise en place de la manière décrite et représentée.

La pièce 20 est complétée par huit nervures dont chacune s'étend axialement en saillie sur la paroi 29 et se prolonge radialement d'un côté en saillie sur le voile 28 et de l'autre côté en saillie sur les portions de paroi 30-1 à 30-4. Ces nervures sont réparties sur la longueur de la pièce et encadrent deux à deux les portions de paroi 30-1 à 30-4. Elles font saillie sur le voile 28 jusqu'au plan radial contenant le côté 27 du profil du cordon 26, auquel elles se raccordent. Elles ont pour effet de rigidifier la pièce 20, qui est moulée avec des parois minces. Quatre ouvertures traversantes 34 sont ménagées dans le voile 28, chacune entre deux nervures adjacentes à la même portion de paroi 30-1 à 30-4.

On voit sur les figures 1 et 2 que les demi-cercles des encoches 21, 23 et 24 sont décalés angulairement les uns par rapport aux autres de façon à tourner leur concavité vers un même point P. Il en résulte que les demi-cercles 23 et 24 s'étendent dans leur ensemble sur une grandeur d'arc supérieure à 180° et se font en partie mutuellement face, les extrémités opposées 36 et 37 de ces demi-cercles étant à une distance mutuelle inférieure à la distance entre leurs centres C1 et C2 augmentée de leurs rayons. Ainsi, lorsque la pièce 20 est déplacée selon la flèche F de la figure 1 pour venir chevaucher les trois paires de tubulures, les régions d'extrémités de la pièce doivent s'écarter élastiquement pour permettre au cordon 26 de contourner les tubulures 4 et 6. Après s'être refermée, la pièce de verrouillage se maintient alors en place sans qu'il soit besoin d'élément de fixation ou de manipulation supplémentaire. Dans le cas du raccordement d'une paire de tubulures unique, le même effet peut être obtenu en donnant au fond de l'encoche unique la forme d'un arc de cercle d'une valeur supérieure à 180°.

Dans la position verrouillée, la face 38 du cordon 26 définissant le bord intérieur de la pièce 20, la face intérieure 39 de la paroi 29, et les bords 40 des portions de paroi 30-1 à 30-4, tous tournés radialement vers les tubulures, s'appuient respectivement sur les tubulures mâles, en arrière des collerettes, sur les portions 15 de plus grand diamètre et sur les portions 17 de plus petit diamètre des tubulures femelles.

## Revendications

1. Dispositif pour le raccordement coaxial bout à bout d'au moins une paire de tubulures dans un circuit de fluide, par emboîtement d'une région d'extrémité d'une première tubulure (6) de la paire dans une région d'extrémité de la seconde tubulure (3), ce dispositif comprenant un épaulement intérieur (10) et un épaulement extérieur (16) prévus dans la région d'extrémité de la seconde tubulure, tournés respectivement vers son extrémité de raccordement (12) et à l'opposé de celle-ci, une collerette (9) radialement extérieure prévue dans la région d'extrémité de la première tubulure, propre à venir axialement en regard dudit épaulement intérieur, et un organe de verrouillage prenant appui sur l'épaulement extérieur et sur la collerette pour serrer axialement de façon étanche au fluide un joint annulaire d'étanchéité (14) entre l'épaulement intérieur et la collerette, caractérisé en ce que l'organe de verrouillage comprend une pièce monobloc (20) présentant deux faces d'appui (32, 31) tournées axialement l'une vers l'autre pour coopérer avec l'épaulement extérieur et avec la collerette respectivement, ces deux faces d'appui étant disposées au voisinage d'une encoche (24) qui traverse axialement la pièce monobloc et dans laquelle les tubulures peuvent être au moins partiellement insérées par un mouvement radial de ladite pièce par rapport à la paire ou à l'ensemble des paires de tubulures, des portions de bord concaves, se faisant face mutuellement, de l'encoche ou de deux encoches (23, 24) associées à des paires de tubulures différentes enveloppant étroitement les tubulures correspondantes (4, 6), de telle sorte que ledit mouvement s'accompagne d'un écartement desdites portions par déformation élastique de ladite pièce qui se referme ensuite sur les tubulures.

2. Dispositif selon la revendication 1 pour le raccordement d'au moins deux paires de tubulures, présentant au moins deux encoches (23, 24) dont chacune possède un bord concave propre à envelopper étroitement les tubulures correspondantes sur environ la moitié de leur circonférence, lesdits bords ayant leurs concavités tournées sensiblement vers un même point (P).

3. Dispositif selon l'une des revendications 1 et 2, caractérisé en ce que la face d'appui (31) associée à la collerette se raccorde par un dièdre saillant à une face (38) tournée radialement vers l'intérieur, venant en appui sur la première tubulure (4-6) au-delà de la collerette (9) par rapport à l'extrémité (8) de cette même tubulure et contribuant à définir le bord de l'encoche.

4. Dispositif selon l'une des revendications précédentes, caractérisé en ce que la face d'appui (32) associée à l'épaulement extérieur (16) se raccorde par un dièdre saillant à une face (40) tournée radialement vers l'intérieur, venant en appui sur la seconde tubulure (17) au-delà de cet épaulement, et/ou par un dièdre rentrant à une face (39) tournée radialement vers l'intérieur, venant en appui sur la seconde tubulure (15) en-deçà de cet épaulement, par rapport à l'extrémité de celle-ci, et contribuant à définir le bord de l'encoche.
